# EUROPEAN PATENT APPLICATION

(11) **EP 4 465 696 A1**
(43) Date of publication of application: **20.11.2024**
(21) Application number: 23752317.0
(22) Date of filing: 06.02.2023
(51) Int. Cl.: H04W 36/30, H04W 76/27

(54) **CELL SWITCHING METHOD, ELECTRONIC DEVICE, AND COMPUTER-READABLE STORAGE MEDIUM**

(30) Priority: 14.02.2022 CN 202210134662
(71) Applicant: ZTE Corporation, Shenzhen, Guangdong 518057 (CN)
(72) Inventor: ZHAO, Yonggang, Shenzhen, Guangdong 518057 (CN)
(74) Representative: Canzler & Bergmeier Patentanwälte Partnerschaft mbB
(86) International application number: PCT/CN2023/074635
(87) International publication number: WO 2023/151537

(57) **Abstract**

The application provides a cell switching method, an electronic device, and a computer readable storage medium. The cell switching method comprises: receiving a cell handover signaling, and acquiring a change amplitude of the signal strength of a current resident cell of a mobile terminal (100); and in response to determining that the change amplitude of the signal strength of the current resident cell does not meet a signal strength weakening condition, determining to continue to reside in the current resident cell (101).

## Description

### TECHNICAL FIELD

Embodiments of the present disclosure relate to the field of communication technology, and in particular, to a cell switching method, an electronic device, and a computer-readable storage medium.

### BACKGROUND

In some convenient areas, several cells may be deployed at a same position in an operator network. For realizing network balancing, the network may instruct a terminal to perform cell switching, but performance of the terminal may not be definitely improved after the cell switching, and sometimes the performance may be reduced, or a scenario of frequent switching between cells may occur.

Meanwhile, some mobile terminals with low mobility, such as a Customer Premise Equipment (CPE) and an OutDoor Unit (ODU), when being used as mobile terminals, are actually placed at fixed positions or are located at the fixed positions for a certain period of time, but are not in a constant-movement scenario like a mobile phone. Therefore, the CPE and the ODU are not often in a mobile-switching scenario.

In addition, some operator networks may be optimized, for example, the operators develop some optimization algorithms by using virtualization technology at a network side for improving network capacity and network resource balancing, but those algorithms which take balanced utilization of network resources into consideration are not necessarily optimal for a terminal, and sometimes performance of a target cell to which the terminal is switched under the control of the network is not as good as performance of a current cell.

### SUMMARY

The embodiments of the present disclosure provide a cell switching method, an electronic device, and a computer-readable storage medium.

In a first aspect, an embodiment of the present disclosure provides a cell switching method, including: receiving a cell switching signaling, and acquiring a variation amplitude of a signal strength of a current camp cell of a mobile terminal; and determining to continuously register in the current camp cell, in response to determining that the variation amplitude of the signal strength of the current camp cell does not meet a signal strength weakening condition.

In a second aspect, an embodiment of the present disclosure provides an electronic device, including: at least one processor; and a memory having stored thereon at least one program which, when executed by the at least one processor, implements the above cell switching method.

In a third aspect, an embodiment of the present disclosure provides a computer-readable storage medium having stored thereon a computer program which, when executed by a processor, implements the above cell switching method.

### BRIEF DESCRIPTION OF DRAWINGS

FIG. 1 is a flowchart illustrating a cell switching method according to an embodiment of the present disclosure;
FIG. 2 is a flowchart illustrating a cell switching method according to an example of an embodiment of the present disclosure; and
FIG. 3 is a block diagram of a cell switching device according to another embodiment of the present disclosure.

### DETAIL DESCRIPTION OF EMBODIMENTS

In order to enable those of ordinary skill in the art to better understand the technical solutions of the present disclosure, a cell switching method, an electronic device, and a computer-readable storage medium provided by the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of' used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

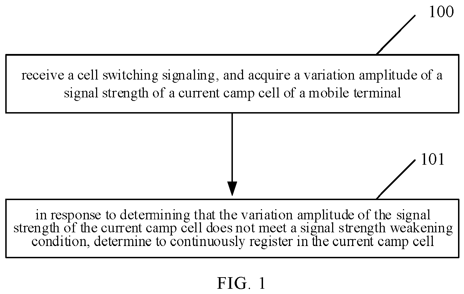

FIG. 1 is a flowchart illustrating a cell switching method according to an embodiment of the present disclosure.

In a first aspect, with reference to FIG. 1, an embodiment of the present disclosure provides a cell switching method applicable to a mobile terminal, including following operations.

At operation 100, a cell switching signaling is received, and a variation amplitude of a signal strength of a current camp cell of the mobile terminal is acquired.

In some exemplary embodiments, before receiving the cell switching signaling, the method further includes pre-recording cell information of a current registered cell or the current camp cell. The cell information includes cell identification information, a signal strength, and a data transmission rate.

In some exemplary embodiments, the cell identification information is information configured to distinguish different cells. For example, the cell identification information may be an Evolved Universal Terrestrial Radio Access (E-UTRA) Absolute Radio Frequency Channel Number (EARFCN), or a Physical Cell Identity (PCI).

In some exemplary embodiments, the mobile terminal may record the cell information of each registered cell or camp cell after being powered on. In a case where the mobile terminal does not register in the registered cell, the cell information of the registered cell includes the cell identification information. In a case where the mobile terminal registers in the registered cell, the registered cell and the camp cell are the same cell, and the cell information of the camp cell includes the cell identification information, the signal strength, and the data transmission rate.

In some exemplary embodiments, the mobile terminal may record the cell information of the current registered cell or the current camp cell at certain time intervals.

In some exemplary embodiments, after receiving the cell switching signaling and before acquiring the variation amplitude of the signal strength of the current camp cell of the mobile terminal, the method further includes: determining whether a cell switching optimization function is turned on, and in a case where the cell switching optimization function is turned on, continuing the acquiring of the variation amplitude of the signal strength of the current camp cell of the mobile terminal; and in a case where the cell switching optimization function is turned off, performing cell switching according to related technologies.

In some exemplary embodiments, the cell switching signaling may be from an operator network.

In some exemplary embodiments, the cell switching signaling may include cell identification information of a target cell.

In some exemplary embodiments, acquiring the variation amplitude of the signal strength of the current camp cell of the mobile terminal includes: acquiring at least two signal strengths of the current camp cell that are pre-recorded; and determining the variation amplitude of the signal strength of the current camp cell according to the at least two signal strengths of the current camp cell.

In some exemplary embodiments, the at least two signal strengths of the current camp cell may be acquired from the pre-recorded cell information of the current camp cell.

In some exemplary embodiments, the at least two signal strengths of the current camp cell may be at least two signal strengths each having a recording time closest to a current time in the pre-recorded cell information of the current camp cell.

In some exemplary embodiments, the at least two signal strengths of the current camp cell may be at least two signal strengths having recording times adjacent to each other in the pre-recorded cell information of the current camp cell.

In some exemplary embodiments, when determining the variation amplitude of the signal strength of the current camp cell according to the at least two signal strengths of the current camp cell, every two signal strengths having recording times adjacent to each other may be set into one group, a variation amplitude of two signal strengths in each group is calculated, and then an average value of variation amplitudes of all groups is calculated and taken as the variation amplitude of the signal strength of the current camp cell; or, a variation amplitude of any one group is selected as the variation amplitude of the signal strength of the current camp cell. For example, the maximum variation amplitude or the minimum variation amplitude among the variation amplitudes of all the groups may be selected as the variation amplitude of the signal strength of the current camp cell, or a variation amplitude of a group having the closest recording times is selected as the variation amplitude of the signal strength of the current camp cell.

For example, any two signal strengths having the recording times adjacent to each other are an i^{th} signal strength and an (i+1)^{th} signal strength respectively, and the recording time of the (i+1)^{th} signal strength is later than that of the i^{th} signal strength, then the variation amplitude of the two signal strengths is a difference between the (i+1)^{th} signal strength and the i^{th} signal strength. If the difference is greater than 0, it is indicated that the signal strength is enhanced; if the difference is less than 0, it is indicated that the signal strength is weakened; and if the difference is equal to 0, it is indicated that the signal strength is neither enhanced nor weakened.

For another example, any two signal strengths having the recording times adjacent to each other are the i^{th} signal strength and the (i+1)^{th} signal strength respectively, and the recording time of the (i+1)^{th} signal strength is later than that of the i^{th} signal strength, then the variation amplitude of the two signal strengths is a difference between the i^{th} signal strength and the (i+1)^{th} signal strength. If the difference is greater than 0, it is indicated that the signal strength is weakened; if the difference is less than 0, it is indicated that the signal strength is enhanced; and if the difference is equal to 0, it is indicated that the signal strength is neither enhanced nor weakened.

At operation 101, it is determined to continuously register in the current camp cell, in response to determining that the variation amplitude of the signal strength of the current camp cell does not meet a signal strength weakening condition.

In some exemplary embodiments, the variation amplitude of the signal strength of the current camp cell being greater than 0 indicates that the signal strength of the current camp cell is enhanced; the variation amplitude of the signal strength of the current camp cell being less than 0 indicates that the signal strength of the current camp cell is weakened; and the variation amplitude of the signal strength of the current camp cell being equal to 0 indicates that the signal strength of the current camp cell is neither enhanced nor weakened.

In some other exemplary embodiments, the variation amplitude of the signal strength of the current camp cell being greater than 0 indicates that the signal strength of the current camp cell is weakened; the variation amplitude of the signal strength of the current camp cell being less than 0 indicates that the signal strength of the current camp cell is enhanced; and the variation amplitude of the signal strength of the current camp cell being equal to 0 indicates that the signal strength of the current camp cell is neither enhanced nor weakened.

In some exemplary embodiments, the variation amplitude of the signal strength of the current camp cell not meeting the signal strength weakening condition includes: the variation amplitude of the signal strength of the current camp cell indicates that the signal strength of the current camp cell is not weakened; or, the variation amplitude of the signal strength of the current camp cell indicates that the signal strength of the current camp cell is weakened and an absolute value of the variation amplitude of the signal strength of the current camp cell is less than or equal to a first preset threshold.

In some exemplary embodiments, the first preset threshold may be set in advance or input by a user.

In some exemplary embodiments, in a case where that the variation amplitude of the signal strength of the current camp cell meets the signal strength weakening condition, the method further includes: acquiring a variation amplitude of the data transmission rate of the current camp cell; and in a case where the variation amplitude of the data transmission rate of the current camp cell does not meet a data-transmission-rate reduction condition, determining to continuously register in the current camp cell and not to perform the cell switching.

In some exemplary embodiments, the variation amplitude of the signal strength of the current camp cell not meeting the signal strength weakening condition includes: the variation amplitude of the signal strength of the current camp cell indicates that the signal strength of the current camp cell is weakened, and the absolute value of the variation amplitude of the signal strength of the current camp cell is greater than the first preset threshold.

In some exemplary embodiments, acquiring the variation amplitude of the data transmission rate of the current camp cell includes: acquiring at least two data transmission rates of the current camp cell that are pre-recorded; and determining the variation amplitude of the data transmission rate of the current camp cell according to the at least two data transmission rates of the current camp cell.

In some exemplary embodiments, the at least two signal strengths of the current camp cell may be acquired from the pre-recorded cell information of the current camp cell.

In some exemplary embodiments, the at least two data transmission rates of the current camp cell may be at least two data transmission rates each having a recording time closest to the current time in the pre-recorded cell information of the current camp cell.

In some exemplary embodiments, the at least two data transmission rates of the current camp cell may be at least two data transmission rates having recording times adjacent to each other in the pre-recorded cell information of the current camp cell.

In some exemplary embodiments, when determining the variation amplitude of the data transmission rate of the current camp cell according to the at least two data transmission rates of the current camp cell, every two data transmission rates having recording times adjacent to each other may be set into one group, a variation amplitude of two data transmission rates in each group is calculated, and then an average value of variation amplitudes of all groups is calculated and taken as the variation amplitude of the data transmission rate of the current camp cell; or, a variation amplitude of any one group is selected as the variation amplitude of the data transmission rate of the current camp cell. For example, the maximum variation amplitude or the minimum variation amplitude among the variation amplitudes of all the groups may be selected as the variation amplitude of the data transmission rate of the current camp cell, or a variation amplitude of a group having the closest recording times is selected as the variation amplitude of the data transmission rate of the current camp cell.

For example, any two data transmission rates having the recording times adjacent to each other are an i^{th} data transmission rate and an (i+1)^{th} data transmission rate respectively, and the recording time of the (i+1)^{th} data transmission rate is later than that of the i^{th} data transmission rate, then the variation amplitude of the two data transmission rates is a difference between the (i+1)^{th} data transmission rate and the i^{th} data transmission rate. If the difference is greater than 0, it is indicated that the data transmission rate is increased; if the difference is less than 0, it is indicated that the data transmission rate is reduced; and if the difference is equal to 0, it is indicated that the data transmission rate is neither increased nor reduced.

For another example, any two data transmission rates having the recording times adjacent to each other are the i^{th} data transmission rate and the (i+1)^{th} data transmission rate respectively, and the recording time of the (i+1)^{th} data transmission rate is later than that of the i^{th} data transmission rate, then the variation amplitude of the two data transmission rates is a difference between the i^{th} data transmission rate and the (i+1)^{th} data transmission rate. If the difference is greater than 0, it is indicated that the data transmission rate is reduced; if the difference is less than 0, it is indicated that the data transmission rate is increased; and if the difference is equal to 0, it is indicated that the data transmission rate is neither increased nor reduced.

In some exemplary embodiments, the variation amplitude of the data transmission rate of the current camp cell being greater than 0 indicates that the data transmission rate of the current camp cell is increased; the variation amplitude of the data transmission rate of the current camp cell being less than 0 indicates that the data transmission rate of the current camp cell is reduced; and the variation amplitude of the data transmission rate of the current camp cell being equal to 0 indicates that the data transmission rate of the current camp cell is neither increased nor reduced.

In some other exemplary embodiments, the variation amplitude of the data transmission rate of the current camp cell being greater than 0 indicates that the data transmission rate of the current camp cell is reduced; the variation amplitude of the data transmission rate of the current camp cell being less than 0 indicates that the data transmission rate of the current camp cell is increased; and the variation amplitude of the data transmission rate of the current camp cell being equal to 0 indicates that the data transmission rate of the current camp cell is neither increased nor reduced.

In some exemplary embodiments, the variation amplitude of the data transmission rate of the current camp cell not meeting the data-transmission-rate reduction condition includes: the variation amplitude of the data transmission rate of the current camp cell indicates that the data transmission rate of the current camp cell is not reduced; or, the variation amplitude of the data transmission rate of the current camp cell indicates that the data transmission rate of the current camp cell is reduced and the variation amplitude of the data transmission rate of the current camp cell is less than or equal to a second preset threshold.

In some exemplary embodiments, the second preset threshold may be set in advance or input by a user.

In some exemplary embodiments, in a case where that the variation amplitude of the data transmission rate of the current camp cell meets the data-transmission-rate reduction condition, the method further includes: determining whether the target cell to be switched to is a previously registered cell; and determining to perform the cell switching in a case where the target cell is the previously registered cell and neither a signal strength nor a data transmission rate of the target cell are recorded in advance, or in a case where the target cell is the previously registered cell and a pre-recorded signal strength of the target cell is greater than the signal strength of the current camp cell.

In some exemplary embodiments, the variation amplitude of the data transmission rate of the current camp cell meeting the data-transmission-rate reduction condition includes: the variation amplitude of the data transmission rate of the current camp cell indicates that the data transmission rate of the current camp cell is reduced and the variation amplitude of the data transmission rate of the current camp cell is greater than the second preset threshold.

In some exemplary embodiments, whether the target cell to be switched to is the previously registered cell may be determined according to the cell identification information in the pre-recorded cell information of the current registered cell or the current camp cell. Specifically, in a case where the cell identification information in the pre-recorded cell information is same as cell identification information of the target cell, it is determined that the target cell to be switched to is the previously registered cell; and in a case where none of the cell identification information in the pre-recorded cell information is same as the cell identification information of the target cell, it is determined that the target cell to be switched to is not the previously registered cell.

In some exemplary embodiments, whether the signal strength and the data transmission rate of the target cell are recorded in advance may be determined according to whether the cell information corresponding to the cell identification information which is same as that of the target cell includes a signal strength and a data transmission rate. Specifically, in a case where the cell information corresponding to the cell identification information which is same as that of the target cell includes the signal strength and the data transmission rate, it is determined that the signal strength and the data transmission rate of the target cell are recorded in advance, the signal strength included in the cell information corresponding to the cell identification information which is same as that of the target cell is the signal strength of the target cell, and the data transmission rate included in the cell information corresponding to the cell identification information which is same as that of the target cell is the data transmission rate of the target cell; and in a case where the cell information corresponding to the cell identification information which is same as that of the target cell includes neither the signal strength nor the data transmission rate, it is determined that the signal strength and the data transmission rate of the target cell are not recorded in advance.

In some exemplary embodiments, when determining whether the pre-recorded signal strength of the target cell is greater than the signal strength of the current camp cell, it is determined whether a signal strength having a recording time closest to the current time of the target cell is greater than a signal strength having a recording time closest to the current time of the current camp cell.

In some exemplary embodiments, in a case where the target cell is the previously registered cell and the pre-recorded signal strength of the target cell is less than or equal to the signal strength of the current camp cell, the method further includes: determining to continuously register in the current camp cell.

In some exemplary embodiments, in a case where the variation amplitude of the data transmission rate of the current camp cell meets the data-transmission-rate reduction condition, the method further includes: determining whether the target cell to be switched to is the previously registered cell; and determining to continuously register in the current camp cell in a case where the target cell is the previously registered cell, the pre-recorded signal strength of the target cell is less than or equal to a third preset threshold, and a pre-recorded data transmission rate of the target cell is less than or equal to a fourth preset threshold.

In some exemplary embodiments, in a case where the target cell is not the previously registered cell, the method further includes: determining to perform the cell switching.

In some exemplary embodiments, the third preset threshold may be set in advance or input by a user.

In some exemplary embodiments, the fourth preset threshold may be set in advance or input by a user.

According to the cell switching method provided in the embodiments of the present disclosure, after the cell switching signaling is received, instead of directly performing the cell switching, whether to perform the cell switching is determined based on the variation amplitude of the signal strength of the current camp cell, which avoids unnecessary switching and improves user experience.

In some exemplary embodiments, whether to perform the cell switching is determined based on the variation amplitude of the data transmission rate of the current camp cell, which avoids the unnecessary switching and improves the user experience.

In some exemplary embodiments, whether to perform the cell switching is determined based on the signal strength and the data transmission rate of the target cell, which avoids the unnecessary switching and improves the user experience.

In order to present a whole cell switching process more fully, the whole cell switching process is illustrated below by an example, but the listed example is not intended to limit the scope of the embodiments of the present disclosure.

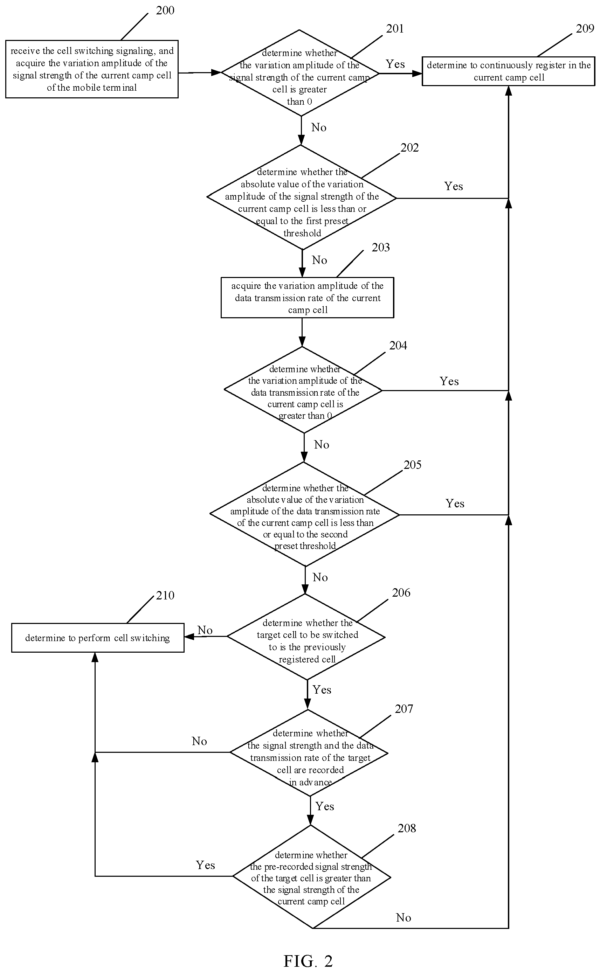

As shown in FIG. 2, the method includes following operations.

At operation 200, the cell switching signaling is received, and the variation amplitude of the signal strength of the current camp cell of the mobile terminal is acquired.

At operation 201, it is determined whether the variation amplitude of the signal strength of the current camp cell is greater than 0, and if the variation amplitude of the signal strength of the current camp cell is greater than 0, operation 209 is performed; and if the variation amplitude of the signal strength of the current camp cell is not greater than 0, operation 202 is performed.

At operation 202, it is determined whether the absolute value of the variation amplitude of the signal strength of the current camp cell is less than or equal to the first preset threshold, and if the absolute value of the variation amplitude of the signal strength of the current camp cell is less than or equal to the first preset threshold, operation 209 is performed; and if the absolute value of the variation amplitude of the signal strength of the current camp cell is neither less than nor equal to the first preset threshold, operation 203 is performed.

At operation 203, the variation amplitude of the data transmission rate of the current camp cell is acquired.

At operation 204, it is determined whether the variation amplitude of the data transmission rate of the current camp cell is greater than 0, and if the variation amplitude of the data transmission rate of the current camp cell is greater than 0, operation 209 is performed; and if the variation amplitude of the data transmission rate of the current camp cell is not greater than 0, operation 205 is performed.

At operation 205, determining whether the absolute value of the variation amplitude of the data transmission rate of the current camp cell is less than or equal to the second preset threshold, and if the absolute value of the variation amplitude of the data transmission rate of the current camp cell is less than or equal to the second preset threshold, operation 209 is performed; and if the absolute value of the variation amplitude of the data transmission rate of the current camp cell is neither less than nor equal to the second preset threshold, operation 206 is performed.

At operation 206, it is determined whether the target cell to be switched to is the previously registered cell, and if the target cell to be switched to is the previously registered cell, operation 207 is performed; and if the target cell to be switched to is not the previously registered cell, operation 210 is performed.

At operation 207, it is determined whether the signal strength and the data transmission rate of the target cell are recorded in advance, and if the signal strength and the data transmission rate of the target cell are recorded in advance, operation 208 is performed; and if neither the signal strength nor the data transmission rate of the target cell are recorded in advance, operation 210 is performed.

At operation 208, it is determined whether the pre-recorded signal strength of the target cell is greater than the signal strength of the current camp cell, and if the pre-recorded signal strength of the target cell is greater than the signal strength of the current camp cell, operation 210 is performed; and if the pre-recorded signal strength of the target cell is not greater than the signal strength of the current camp cell, operation 209 is performed.

At operation 209, it is determined to continuously register in the current camp cell.

At operation 210, it is determined to perform the cell switching.

In a second aspect, another embodiment of the present disclosure provides an electronic device, including: at least one processor; and a memory having stored thereon at least one program which, when executed by the at least one processor, implements the above cell switching method.

The processor is a device having data processing capability, and includes, but is not limited to, a Central Processing Unit (CPU); and the memory is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some embodiments, the processor and the memory are connected to each other through a bus, and then are connected to other components of a computing device.

In a third aspect, another embodiment of the present disclosure provides a computer-readable storage medium having stored thereon a computer program which, when executed by a processor, implements the above cell switching method.

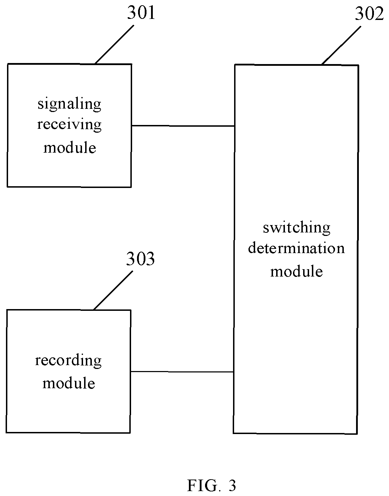

FIG. 3 is a block diagram of a cell switching device according to another embodiment of the present disclosure.

In a fourth aspect, another embodiment of the present disclosure provides a cell switching device, including: a signaling receiving module 301 configured to receive a cell switching signaling; and a switching determination module 302 configured to acquire a variation amplitude of a signal strength of a current camp cell of a mobile terminal, and determine to continuously register in the current camp cell in a case where the variation amplitude of the signal strength of the current camp cell does not meet a signal strength weakening condition.

In some exemplary embodiments, the variation amplitude of the signal strength of the current camp cell not meeting the signal strength weakening condition includes: the variation amplitude of the signal strength of the current camp cell indicates that the signal strength of the current camp cell is not weakened; or, the variation amplitude of the signal strength of the current camp cell indicates that the signal strength of the current camp cell is weakened and an absolute value of the variation amplitude of the signal strength of the current camp cell is less than or equal to a first preset threshold.

In some exemplary embodiments, the switching determination module 302 is specifically configured to acquire the variation amplitude of the signal strength of the current camp cell of the mobile terminal by acquiring at least two signal strengths of the current camp cell that are pre-recorded; and determining the variation amplitude of the signal strength of the current camp cell according to the at least two signal strengths of the current camp cell.

In some exemplary embodiments, the switching determination module 302 is further configured to: acquire a variation amplitude of a data transmission rate of the current camp cell in a case where the variation amplitude of the signal strength of the current camp cell meets the signal strength weakening condition, and determine to continuously register in the current camp cell in a case where the variation amplitude of the data transmission rate of the current camp cell does not meet a data-transmission-rate reduction condition.

In some exemplary embodiments, the variation amplitude of the signal strength of the current camp cell not meeting the signal strength weakening condition includes: the variation amplitude of the signal strength of the current camp cell indicates that the signal strength of the current camp cell is weakened, and the absolute value of the variation amplitude of the signal strength of the current camp cell is greater than the first preset threshold.

In some exemplary embodiments, the variation amplitude of the data transmission rate of the current camp cell not meeting the data-transmission-rate reduction condition includes: the variation amplitude of the data transmission rate of the current camp cell indicates that the data transmission rate of the current camp cell is not reduced; or, the variation amplitude of the data transmission rate of the current camp cell indicates that the data transmission rate of the current camp cell is reduced and the variation amplitude of the data transmission rate of the current camp cell is less than or equal to a second preset threshold.

In some exemplary embodiments, the switching determination module 302 is specifically configured to acquire the variation amplitude of the data transmission rate of the current camp cell by acquiring at least two data transmission rates of the current camp cell that are pre-recorded; and determining the variation amplitude of the data transmission rate of the current camp cell according to the at least two data transmission rates of the current camp cell.

In some exemplary embodiments, the switching determination module 302 is further configured to: determine, in a case where that the variation amplitude of the data transmission rate of the current camp cell meets the data-transmission-rate reduction condition, whether a target cell to be switched to is a previously registered cell, and determine to perform cell switching in a case where the target cell is the previously registered cell and neither a signal strength nor a data transmission rate of the target cell are recorded in advance, or in a case where the target cell is the previously registered cell and a pre-recorded signal strength of the target cell is greater than the signal strength of the current camp cell.

In some exemplary embodiments, the variation amplitude of the data transmission rate of the current camp cell meeting the data-transmission-rate reduction condition includes: the variation amplitude of the data transmission rate of the current camp cell indicates that the data transmission rate of the current camp cell is reduced and the variation amplitude of the data transmission rate of the current camp cell is greater than the second preset threshold.

In some exemplary embodiments, the switching determination module 302 is further configured to: determine to continuously register in the current camp cell in a case where the target cell is the previously registered cell and the pre-recorded signal strength of the target cell is less than or equal to the signal strength of the current camp cell.

In some exemplary embodiments, the switching determination module 302 is further configured to: determine, in a case where the variation amplitude of the data transmission rate of the current camp cell meets the data-transmission-rate reduction condition, whether the target cell to be switched to is the previously registered cell; and determine to continuously register in the current camp cell in a case where the target cell is the previously registered cell, the pre-recorded signal strength of the target cell is less than or equal to a third preset threshold, and a pre-recorded data transmission rate of the target cell is less than or equal to a fourth preset threshold.

In some exemplary embodiments, the cell switching device further includes a recording module 303 configured to pre-record cell information of a current registered cell or the current camp cell. The cell information includes: cell identification information, a signal strength, and a data transmission rate.

A specific implementation process of the cell switching device is the same as that of the cell switching method described in the aforesaid embodiments, and thus will not be repeated here.

It should be understood by those of ordinary skill in the art that the functional modules/units in all or some of the operations, the systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

## Claims

1. A cell switching method, comprising:
receiving a cell switching signaling, and acquiring a variation amplitude of a signal strength of a current camp cell of a mobile terminal; and
determining to continuously register in the current camp cell, in response to determining that the variation amplitude of the signal strength of the current camp cell does not meet a signal strength weakening condition.

2. The cell switching method of claim 1, wherein the variation amplitude of the signal strength of the current camp cell not meeting the signal strength weakening condition comprises:
the variation amplitude of the signal strength of the current camp cell indicates that the signal strength of the current camp cell is not weakened, or
the variation amplitude of the signal strength of the current camp cell indicates that the signal strength of the current camp cell is weakened and an absolute value of the variation amplitude of the signal strength of the current camp cell is less than or equal to a first preset threshold.

3. The cell switching method of claim 1, wherein acquiring the variation amplitude of the signal strength of the current camp cell of the mobile terminal comprises:
acquiring at least two signal strengths of the current camp cell that are pre-recorded; and
determining the variation amplitude of the signal strength of the current camp cell according to the at least two signal strengths of the current camp cell.

4. The cell switching method of any one of claims 1 to 3, in response to determining that the variation amplitude of the signal strength of the current camp cell meets the signal strength weakening condition, further comprising:
acquiring a variation amplitude of a data transmission rate of the current camp cell; and
determining to continuously register in the current camp cell, in response to determining that the variation amplitude of the data transmission rate of the current camp cell does not meet a data-transmission-rate reduction condition.

5. The cell switching method of claim 4, wherein the variation amplitude of the signal strength of the current camp cell not meeting the signal strength weakening condition comprises:
the variation amplitude of the signal strength of the current camp cell indicates that the signal strength of the current camp cell is weakened, and an absolute value of the variation amplitude of the signal strength of the current camp cell is greater than a first preset threshold.

6. The cell switching method of claim 4, wherein the variation amplitude of the data transmission rate of the current camp cell not meeting the data-transmission-rate reduction condition comprises:
the variation amplitude of the data transmission rate of the current camp cell indicates that the data transmission rate of the current camp cell is not reduced, or
the variation amplitude of the data transmission rate of the current camp cell indicates that the data transmission rate of the current camp cell is reduced and the variation amplitude of the data transmission rate of the current camp cell is less than or equal to a second preset threshold.

7. The cell switching method of claim 4, wherein acquiring the variation amplitude of the data transmission rate of the current camp cell comprises:
acquiring at least two data transmission rates of the current camp cell that are pre-recorded; and
determining the variation amplitude of the data transmission rate of the current camp cell according to the at least two data transmission rates of the current camp cell.

8. The cell switching method of claim 4, in response to determining that the variation amplitude of the data transmission rate of the current camp cell meets the data-transmission-rate reduction condition, further comprising:
determining whether a target cell to be switched to is a previously registered cell; and
determining to perform cell switching in response to determining that the target cell is the previously registered cell and meeting one of a condition in which neither a signal strength nor a data transmission rate of the target cell are recorded in advance, and a condition in which a pre-recorded signal strength of the target cell is greater than the signal strength of the current camp cell.

9. The cell switching method of claim 8, wherein the variation amplitude of the data transmission rate of the current camp cell meeting the data-transmission-rate reduction condition comprises:
the variation amplitude of the data transmission rate of the current camp cell indicates that the data transmission rate of the current camp cell is reduced and the variation amplitude of the data transmission rate of the current camp cell is greater than a second preset threshold.

10. The cell switching method of claim 8, in response to determining that the target cell is the previously registered cell and the pre-recorded signal strength of the target cell is less than or equal to the signal strength of the current camp cell, further comprising: determining to continuously register in the current camp cell.

11. The cell switching method of claim 4, in response to determining that the variation amplitude of the data transmission rate of the current camp cell meets the data-transmission-rate reduction condition, further comprising:
determining whether a target cell to be switched to is a previously registered cell; and
determining to continuously register in the current camp cell in response to determining the target cell is the previously registered cell, a pre-recorded signal strength of the target cell is less than or equal to a third preset threshold, and a pre-recorded data transmission rate of the target cell is less than or equal to a fourth preset threshold.

12. The cell switching method of any one of claims 1 to 3, before receiving the cell switching signaling, further comprising:
pre-recording cell information of a current registered cell or the current camp cell; wherein the cell information comprises: cell identification information, a signal strength, and a data transmission rate.

13. An electronic device, comprising:
at least one processor; and
a memory having stored thereon at least one program which, when executed by the at least one processor, implements the cell switching method of any one of claims 1 to 12.

14. A computer-readable storage medium having stored thereon a computer program which, when executed by a processor, implements the cell switching method of any one of claims 1 to 12.
